# EUROPEAN PATENT APPLICATION

(11) **EP 2 937 299 A1**
(43) Date of publication of application: **28.10.2015**
(21) Application number: 14763406.7
(22) Date of filing: 11.03.2014
(51) Int. Cl.: B65G 1/04, B65G 47/90, B65G 57/03

(54) **TRANSPORT DEVICE FOR ARTICLE TRANSPORT BOXES**

(30) Priority: 15.03.2013 JP 2013052932
(71) Applicant: Daifuku Co., Ltd., Osaka-shi, Osaka 555-0012 (JP)
(72) Inventor: TAKAO, Suzushi, Osaka-shi Osaka 555-0012 (JP)
(74) Representative: Hoffmann Eitle
(86) International application number: PCT/JP2014/056282
(87) International publication number: WO 2014/142107

(57) **Abstract**

A transport device for article transport boxes utilizable in a facility for storing or sorting stacked box-type pallets of various sizes, in which four gripping columnar members (9a to 9d) vertically movably provided to a transporting traveling body (3) supported so as to be horizontally travelable on an upper side of a storage area have an angular shape in cross section, in the inside of which gripping faces pressure-contacted to rectangular sides on both sides of each corner of an article transport box are provided. An elevating drive means and a gripping drive means of the gripping columnar members are provided to the transporting traveling body (3). The gripping drive means moves at least three gripping columnar members of the four gripping columnar members horizontally between a retracting position of being away outside from each corner of the article transport box, and a gripping position of gripping the article transport box via the four corners thereof by way of the four gripping columnar members.

## Description

### Technical Field

The present invention relates to a transport device which hoists and transports a stackable article transport box having a planar shape of a rectangular parallelogram.

### Background Art

As this kind of transport device, there is known one in which an overhead traveling crane type transporting traveling body is provided with a vertically movably suspended elevating body, and a hook is provided below the elevating body so as to be engaged and disengaged with respect to an engaged fitting provided to the article transport box or a recessed space around the lower end thereof, as described in Patent Document 1.

### Prior Art Document

### Patent Document

Patent Document 1: Japanese unexamined patent application publication No. H06-115608.

### Summary of the Invention

### Problem to be Solved by the Invention

In the configuration described in the above Patent Document 1, the provision of the engaged fitting exclusive for suspension to an upper end of the article transport box being an object to be transported or the formation of the article transport box into the shape such that a recessed space is formed around the lower end is a requirement. Thus, generally distributed plastic containers cannot be used as they are, as the objects to be transported. Further, a drive means for operating the hook to engage and disengage is needed in the elevating body vertically movably suspended from the transporting traveling body. Not only is the structure complicated and the cost becomes higher, but also the elevating body is provided with the drive means for operating the hook to engage and disengage positioned immediately above the hoisted and transported article transport box. Accordingly, supposing that a plurality of stacked article transport boxes are designed to be hoisted by engaging the hook into the recessed space around the lower end of the lowermost article transport box, space for hoisting the article transport boxes stacked up to the maximum number of stages which the vertically elongated hook can handle to a transport level must be secured below the elevating body (below the drive means for operating the hook to engage and disengage). The need arises for the traveling level of the transporting traveling body to be made considerably high. In practice, it is impossible in the configuration described in Patent Document 1 to handle a large number of stacked article transport boxes all at once.

### Means for Solving the Problem

The present invention proposes a transport device for article transport boxes capable of solving the foregoing conventional problem. Described by giving reference symbols in parentheses used in the description of embodiments described later in order to facilitate understanding the relationship with the embodiments, the transport device for article transport boxes according to the present invention is configured such that a transporting traveling body (3) supported so as to be horizontally travelable on an upper side of a storage area is provided with four vertically oriented gripping columnar members (9a to 9d) respectively gripping four corners of a stackable article transport box (B) placed in the storage area and having a planar shape of a rectangular parallelogram, and the four gripping columnar members (9a to 9d) have an angular shape in cross section, in the inside of which gripping faces pressure-contacted to rectangular sides on both sides of each corner of the article transport box (B) are provided, and an elevating drive means (26) raising and lowering the four gripping columnar members (9a to 9d) with respect to the transporting traveling body (3) and a gripping drive means (15) are provided to the transporting traveling body (3), and the gripping drive means (15) moves at least three gripping columnar members (9b to 9d) of the four gripping columnar members (9a to 9d) horizontally between a retracting position of being away outside from each corner of the article transport box (B), and a gripping position of liftably gripping the article transport box (B) via the four corners thereof by way of the four gripping columnar members (9a to 9d).

In the transport device of the present invention, handled article transport boxes are placed within the storage area such that their rectangular parallelogram planar shapes have the same orientation as that formed inside the four gripping columnar members. In retrieving a specific article transport box of the article transport boxes in such state, the transporting traveling body with the four gripping columnar members raised to an ascent limit position higher than the highest level of the article transport boxes stacked in the storage area is traveled to a position immediately above the article transport box to be retrieved, and the four gripping columnar members in the retracting position are lowered by the elevating drive means. After the four gripping columnar members are lowered to a position immediately beside the article transport box to be retrieved, the gripping columnar members are horizontally moved inward to the gripping position by the gripping drive means to grip the article transport box to be retrieved by the four gripping columnar members via the four corners. Afterwards, the four gripping columnar members are raised to the ascent limit position by the elevating drive means to raise the article transport box to be retrieved-gripped by the four gripping columnar members to a predetermined transport level, and the transporting traveling body is traveled to a predetermined load handling area.

For unloading operation of the article transport box having been transported to the load handling area, the retrieval operation of the article transport box to be retrieved in the storage area, that is, the elevating movement of the four gripping columnar members by the elevating drive means and the horizontal movement between the retracting position and the gripping position of the gripping columnar members by the gripping drive means, have only to be performed in the reverse order. The storage operation of the article transport box from the load handling area to a predetermined position of the storage area can be performed in the order reverse to the retrieval operation described above.

### Effects of the Invention

According to the transport device of the present invention capable of performing the storage and retrieval operations of the article transport box as above, the article transport box is gripped by the gripping columnar members angular in cross section through use of the corners of the article transport box having the greatest strength against an external pressure and being capable of ensuring the length, so that very ordinary general-purpose four-cornered article transport boxes having the parallelogram planar shape can be handled as they are as article transport boxes being the objects to be transported. Moreover, even if the gipping force is made sufficiently larger, the article transport box can be reliably and firmly gripped and transported without causing an unreasonable deformation thereto as compared to the case of gripping the sides between the corners.

Moreover, the elevating drive means and the gripping drive means causing the gripping columnar members to perform the necessary elevating movement and horizontal movement between the retracting position and the gripping position are both provided to the transporting traveling body. Therefore, the configuration is simplified and can be carried out inexpensively. Additionally, only the four vertically moving gripping columnar members are projected downward from below the transporting traveling body, and thus, the travel height of the transporting traveling body can be lowered at least by a height of the elevating body as compared to the case where the elevating body is vertically movably suspended below the transporting traveling body and a means for hoisting the article transport box is provided to this elevating body.

Further, the four gripping columnar members are made to have a length in an elevating direction sufficient to grip a plurality of stacked article transport boxes having the same planar size all together, whereby not only can all of them be stored and retrieved all at once even if stacked, but storage and retrieval operations limited to one or a plurality of article transport boxes at a given height of the stacked article transport boxes can also be performed simply and easily as shown in the embodiments described later.

It is, as a matter of course, conceivable that the four gripping columnar members (9a to 9d) are designed to vertically pass through the transporting traveling body (3) to be vertically movable. The article transport box (B) gripped by the four gripping columnar members (9a to 9d) is also designed to be vertically movable within a vertical through opening (10) provided to the transporting traveling body (3), together with the four gripping columnar members (9a to 9d), whereby a vertical space necessary below the transporting traveling body can be reduced, and the traveling level of the transporting traveling body can be lowered and the stack height of the article transport boxes handleable all at once can be increased.

A specific configuration in implementing the transport device of the present invention will be described. One of the four gripping columnar members (9a) which is positioned on one corner between two rectangular sides of a rectangular parallelogram space formed inside the four gripping columnar members (9a to 9d) is only vertically movably supported at a fixed position of the transporting traveling body (3) as a reference gripping columnar member, and the respective gripping columnar members (9b to 9d) positioned on the other three corners are vertically movably supported to three movable bases (13b to 13d) capable of horizontal movement in a direction parallel to one of two rectangular sides extending from each corner and horizontal movement in a direction parallel to the other side, and the gripping drive means (15) capable of moving the three movable bases(13b to 13d) by a given distance such that a space formed inside the three gripping columnar members (9b to 9d) after the horizontal movement and the reference gripping columnar member (9a) becomes a rectangular parallelogram can be used. According to this configuration, the transporting traveling body finally must be positioned at a position where the reference gripping columnar member is fitted to one corner of reference of the article transport box. However, one gripping columnar member serving as the reference gripping columnar member does not need to be moved horizontally, so that the configuration is simplified and can be carried out inexpensively.

As a matter of course, all of the four gripping columnar members (9a to 9d) can be designed to be horizontally movable. More specifically, a rectangular parallelogram space formed inside the four gripping columnar members (9a to 9d) has four corners, in the outside of which a movable base (13b to 13e) capable of horizontal movement in a direction parallel to one of two rectangular sides extending from each corner and horizontal movement in a direction parallel to the other side is arranged, and the gripping columnar members (9a to 9d) are respectively vertically movably supported to the four movable bases (13b to 13e), and the gripping drive means (41 to 43) capable of moving the four movable bases (13b to 13e) by a given distance such that a space formed inside the four gripping columnar members(9a to 9d) after the horizontal movement becomes a rectangular parallelogram in a plan view can be used.

Further, the gripping drive means horizontally moving the gripping columnar members is provided to the transporting traveling body in the configuration of the present invention. It is conceivable in gripping all of stacked article transport boxes all at once that the length of the gripping columnar members hung downward from the transporting traveling body is increased if the height of all of stacked article transport boxes handleable is intended to be increased, as a result of which the gripping columnar members are bent when gripping the article transport boxes, and the gripping force of the lower end portions is weakened. In order to solve this problem, a narrowing means (82, 87, 88, 91) narrowing at least lower end portions of the four gripping columnar members (9a to 9d) inward can be placed side by side with the four gripping columnar members (9a to 9d), aside from the gripping drive means.

In addition to be able to be composed of a pulling cord-like body (84) stretched between adjacent gripping columnar members, the narrowing means described above can be composed of a double link (93) having both end portions pivotally supported to the adjacent gripping columnar members and an intermediate fulcrum portion lifted upward.

Furthermore, to enhance the gripping force by the gripping columnar members (9a to 9d), the gripping faces of at least two diagonally positioned gripping columnar members of the four gripping columnar members (9a to 9d) can be composed of an anti-slip means (an air bag, an elastic material such as rubber, a pinholder structure composed of closely arranged movable pins each urged to project from the gripping faces, etc.) (11a, 99) inhibiting relative vertical slip with the article transport box (B) at the time of being pressure-contacted thereto. Further, at least two diagonally positioned gripping columnar members of the four gripping columnar members (9a to 9d) can have a lower end provided with a receiver (100) switchable between an acting position of receiving a bottom surface of the article transport box (B) and a retracting position of being away sideways from the article transport box (B).

### Brief Description of the Drawings

[Fig. 1] Fig. 1 is a schematic perspective view showing an entire storage facility using a transport device for article transport boxes of the present invention.
[Fig. 2] Fig. 2 is a plan view showing a main part of the above storage facility.
[Fig. 3] Fig. 3A is a cross sectional plan view showing a gripping drive means of four gripping columnar members in a transporting traveling body and Fig. 3B is an enlarged view of a part B of Fig. 3A.
[Fig 4] Fig. 4 is a plan view showing an elevating drive means of the four gripping columnar members in the transporting traveling body.
[Fig. 5] Figs. 5A to 5C are side views explaining each step of the first half of a procedure in retrieving stacked article transport boxes and Fig. 5D and Fig. 5E are plan views showing positional relationships between the article transport boxes and the gripping columnar members at the steps of Fig. 5A and Fig. 5B.
[Fig. 6] Figs. 6A to 6C are side views explaining each step of the latter half of the procedure in retrieving the stacked article transport boxes and Fig. 6D is a plan view showing a positional relationship between the article transport boxes and the gripping columnar members at the step of Fig. 6A.
[Fig. 7] Fig. 7A is a side view showing the final step in retrieving the stacked article transport boxes and Fig. 7B is a side view showing the first step of a procedure in retrieving an article transport box located at the middle stage of the stacked article transport boxes.
[Fig. 8] Figs. 8A to 8C are side views explaining each step following Fig. 7B.
[Fig. 9] Fig. 9 is a cross sectional plan view showing a second embodiment of the gripping drive means of the four gripping columnar members.
[Fig. 10] Fig. 10 is a cross sectional plan view showing an operating state of the gripping drive means according to the above second embodiment.
[Fig. 11] Fig. 11 is a cross sectional plan view showing a main part of a third embodiment of the gripping drive means of the four gripping columnar members.
[Fig. 12] Fig. 12A and Fig. 12B are perspective views showing two types of a narrowing means placed side by side with the four gripping columnar members.
[Fig. 13] Fig. 13A is a cross sectional plan view showing another narrowing means placed side by side with the four gripping columnar members and Fig. 13B is an enlarged view showing a part B of Fig. 13A.
[Fig. 14] Fig. 14 is a perspective view showing still another narrowing means placed side by side with the four gripping columnar members.
[Fig. 15] Figs. 15A to 15C are longitudinal sectional side views of main parts showing anti-slip means respectively placed side by side with the gripping columnar members.

### Modes for Carrying Out the Invention

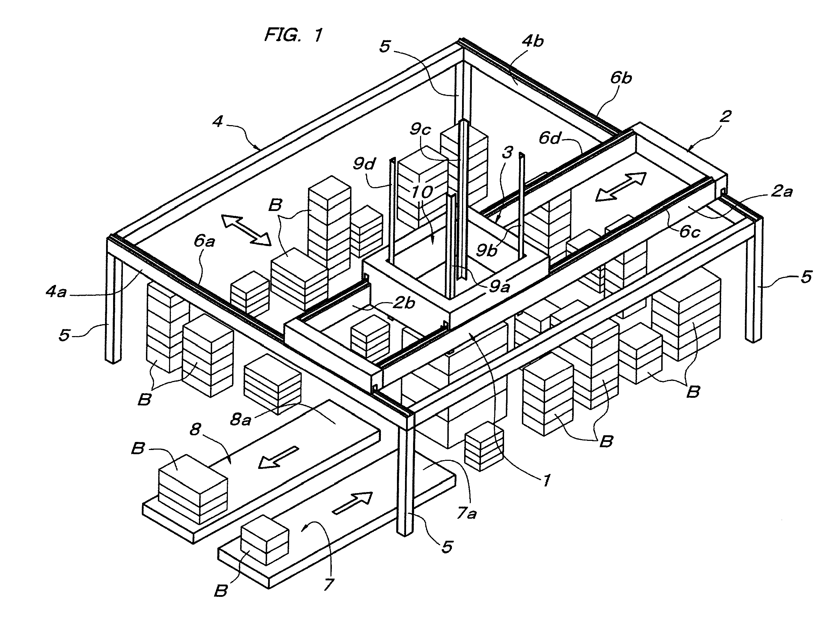

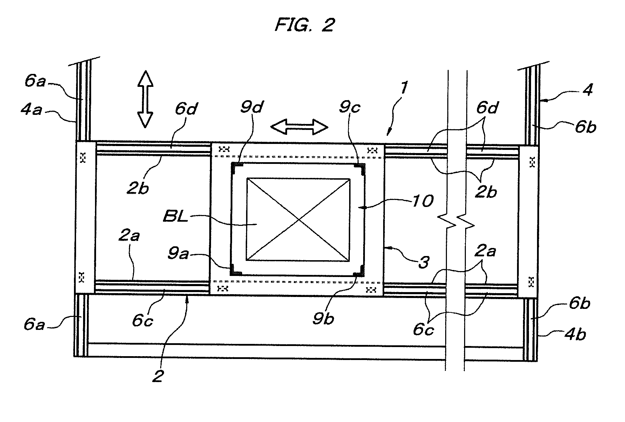

In Fig. 1 and Fig. 2, reference symbol 1 denotes an overhead traveling crane type transport device, which is arranged on an upper side of a storage area composed of a flat floor surface having a planar shape of a parallelogram. This transport device 1 is composed of a supporting traveling body 2 and a transporting traveling body 3 supported on the supporting traveling body 2 so as to be travelable in a direction perpendicular to the traveling direction of the supporting traveling body 2. In the storage area, a rectangular frame structure 4 surrounding the storage area is horizontally disposed at a fixed height above the floor surface via column members 5. The supporting traveling body 2 has both end portions supported on a pair of guide rails 6a and 6b laid on a set of mutually parallel beam members 4a and 4b of the rectangular frame structure 4, via a plurality of wheels including motor-driven drive wheels. The supporting traveling body 2 is provided with a pair of side frames 2a and 2b perpendicular to the guide rails 6a and 6b. The transporting traveling body 3 has both sides supported on guide rails 6c and 6d laid on both side frames 2a and 2b, via a plurality of wheels including motor-driven drive wheels.

A storage conveyor 7 and a retrieval conveyor 8 are placed side by side in the storage area. Both conveyors 7 and 8 have a transferring end portion 7a, 8a on the storage area side, entering into the storage area. The transporting traveling body 3 can be placed in any position of the entire storage area surrounded by the rectangular frame structure 4 including the transferring end portions 7a and 8a of the storage and retrieval conveyors 7 and 8 by the traveling of the supporting traveling body 2 on the guide rails 6a and 6b and the traveling of the transporting traveling body 3 on the guide rails 6c and 6d.

The transporting traveling body 3 is provided with four gripping columnar members 9a to 9d. These gripping columnar members 9a to 9d have an angular shape in cross section capable of respectively fitting to four corners of an article transport box B to be handled. The gripping columnar members 9a to 9d vertically pass through a vertically penetrating opening 10 provided to the transporting traveling body 3 and assume a parallelogram in a plan view. The opening 10 is composed of sides parallel to the traveling direction of the supporting traveling body 2 and sides parallel to the traveling direction of the transporting traveling body 3 as shown in Fig. 2. With the gripping columnar members 9a to 9d located on the four corners, the opening 10 has a space through which an article transport box BL having the largest planar size of the handled article transport boxes B can vertically move inside the four gripping columnar members 9a to 9d with room.

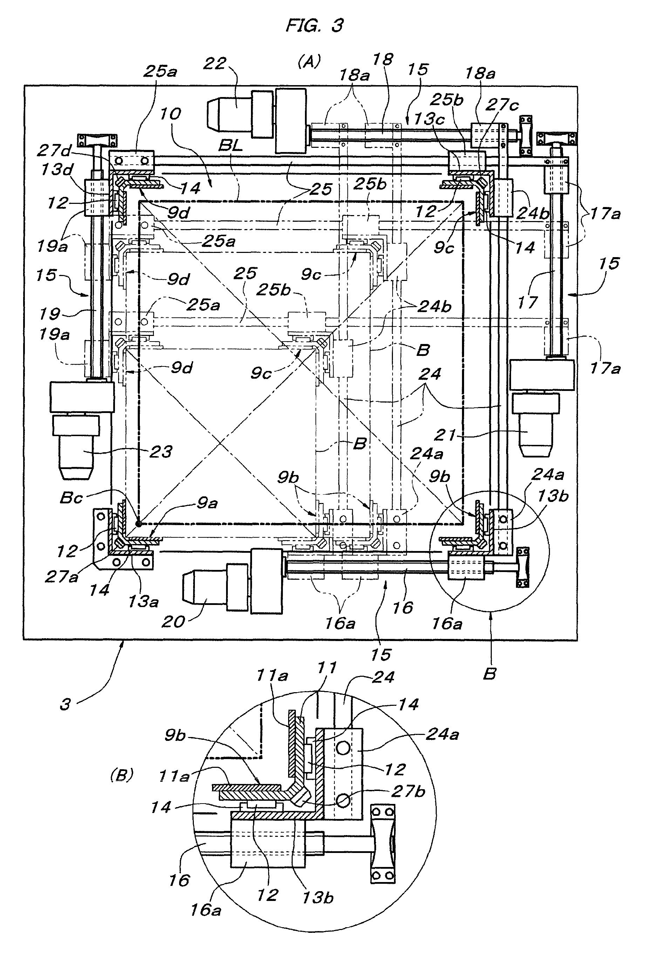

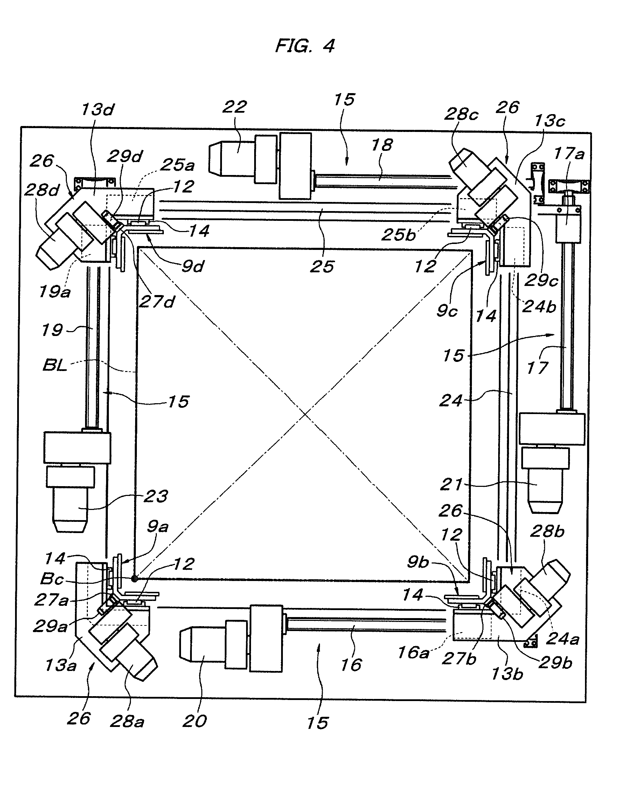

Hereinafter, a detailed structure of the four gripping columnar members 9a to 9d and a drive means thereof will be described based on Fig. 3 and Fig. 4. Each of the gripping columnar members 9a to 9d is such that a long main body 11 having an angular shape in cross section and being vertically long has perpendicular inner surfaces stretched with strip elastic materials 11 a forming gripping faces and perpendicular outer surfaces laid with elevating guide rails 12 continued over the entire length. A reference gripping columnar member 9a of the four gripping columnar members 9a to 9d is vertically movably supported to a fixed base 13a fixed on the transporting traveling body 3 so as to be placed outside one corner of the opening 10 of the transporting traveling body 3, via elevating guide blocks 14 fitted to the elevating guide rails 12 provided to the reference gripping columnar member 9a. The other three gripping columnar members 9b to 9d are vertically movably supported to respective movable bases 13b to 13d arranged on the transporting traveling body 3 in response to the rest of three corners of the opening 10 of the transporting traveling body 3, via elevating guide blocks 14 fitted to the guide rails 12 provided to the respective gripping columnar members 9b to 9d, respectively.

The movable bases 13b to 13d are each driven by a gripping drive means 15. A configuration of this gripping drive means 15 will be described on the precondition that the fixed base 13a and the movable bases 13b to 13d are each positioned on four corners of a virtual parallelogram. The gripping drive means 15 includes driving screw shafts 16 to 19 respectively arranged outside four sides of the virtual parallelogram and in parallel with these respective sides and supported on the transporting traveling body 3 so as to be rotatable on their axes only, speed reducer equipped motors 20 to 23 individually driving the respective driving screw shafts 16 to 19 to rotate in normal and reverse directions, a slide guide rod 24 arranged outside and parallel to a side of the four sides of the virtual parallelogram which is between the movable bases 13b and 13c, and a slide guide rod 25 arranged outside and parallel to a side between the movable bases 13c and 13d. A female screw body 16a screwed and fitted to the driving screw shaft 16 and a rod fixing member 24a fixing one end of the slide guide rod 24 are attached outside the movable base 13b. A slide guide 24b slidably fitted to the outside of the slide guide rod 24 and a slide guide 25b slidably fitted to the outside of the slide guide rod 25 are attached outside the movable base 13c. A rod fixing member 25a fixing one end of the slide guide rod 25 and a female screw body 19a screwed and fitted to the driving screw shaft 19 are attached outside the movable base 13d. Further, the other end of the slide guide rod 25 is fixed to a female screw body 17a screwed and fitted to the driving screw shaft 17, and the other end of the slide guide rod 24 is fixed to a female screw body 18a screwed and fitted to the driving screw shaft 18.

The speed reducer equipped motor 20 and the speed reducer equipped motor 22 always synchronize and horizontally move the female screw bodies 16a and 18a at the same speed and in the same direction via the driving screw shafts 16 and 18. The speed reducer equipped motor 21 and the speed reducer equipped motor 23 always synchronize and horizontally move the female screw bodies 17a and 19a at the same speed and in the same direction via the driving screw shafts 17 and 19. Thus, upon operation of the speed reducer equipped motors 20 and 22, the movable base 13b directly receives thrust from the female screw body 16a and moves in parallel with the side between the movable base 13b and the fixed base 13a. The movable base 13c is moved at the same speed and in the same direction as the movable base 13b by the slide guide rod 24 driven by the movable base 13b and the female screw body 18a so as to be translated. Upon operation of the speed reducer equipped motors 21 and 23, the movable base 13d directly receives thrust from the female screw body 19a and moves in parallel with the side between the movable base 13d and the fixed base 13a. The movable base 13c is moved at the same speed and in the same direction as the movable base 13d by the slide guide rod 25 driven by the movable base 13d and the female screw body 17a so as to be translated.

The gripping columnar members 9a to 9d are raised and lowered relative to the fixed base 13a and the movable bases 13b to 13d respectively supporting them, by an elevating drive means 26. The elevating drive means 26 is composed of rack gears 27a to 27d attached on respective outer corners of the gripping columnar members 9a to 9d along their length directions, speed reducer equipped motors 28a to 28d mounted on the fixed base 13a and the respective movable bases 13b to 13d, and pinion gears 29a to 29d attached to respective output shafts of the speed reducer equipped motors 28a to 28d and meshing with the rack gears 27a to 27d. The respective speed reducer equipped motors 28a to 28d always synchronize and raise and lower the four gripping columnar members 9a to 9d at the same speed and in the same direction relative to the fixed base 13a and the respective movable bases 13b to 13d via the pinion gears 29a to 29d and rack gears 27a to 27d respectively driven by the speed reducer equipped motors 28a to 28d.

The article transport boxes B placed on the flat floor surface in the storage area as shown in Fig. 1 are those that have been gripped at the four corners by the four gripping columnar members 9a to 9d of the transporting traveling body 3 of the transport device 1 and put into storage. Thus, the orientation in the horizontal plane of a parallelogram-shaped upper surface of every article transport box B is the same as that of the virtual parallelogram formed inside the four gripping columnar members 9a to 9d of the transporting traveling body 3, and a space for the gripping columnar members 9a to 9d to vertically move with room is secured between adjacent article transport boxes B. As a matter of course, planar sizes of parallelograms of the stored article transport boxes B are not identical and different sizes coexist. In stacking the article transport boxes B, article transport boxes B at least having the same planar size of the parallelogram are stacked.

The position in the horizontal two-dimensional plane of each article transport box B (including stacked ones) stored within the storage area as described above can be controlled by replacement with information on the absolute position in the horizontal two-dimensional plane within the storage area of one corner of the parallelogram-shaped upper surface of each article transport box B, that is, a corner Bc of reference which is gripped by the only vertically movable reference gripping columnar member 9a. Positional information on the article transport box B can include planar size information provided at the time of storage or planar size information obtained, at the time of storage, by calculation from traveling distances of the gripping columnar members 9a to 9d gripping the article transport box B concerned as information on the relative position of the rest of three corners with respect to the information on the absolute position of the reference corner Bc, for example.

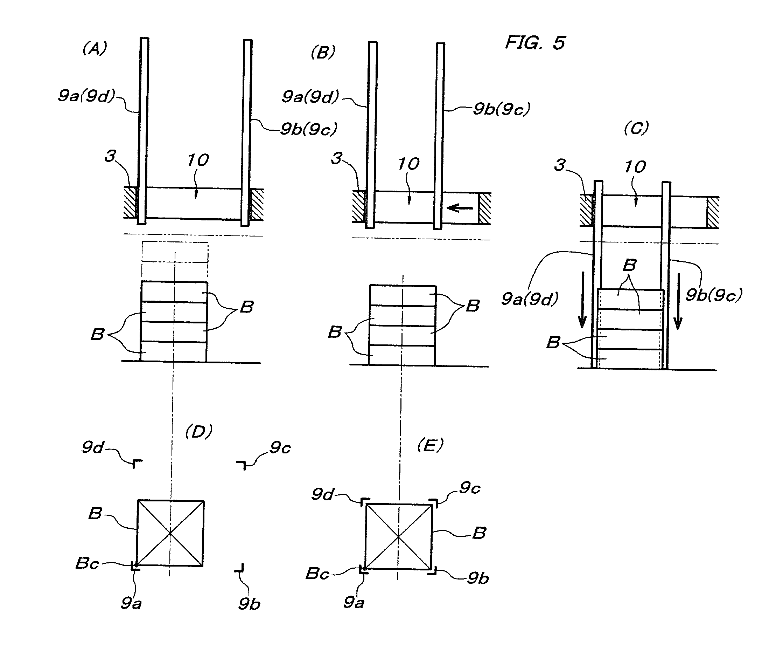

Hereinafter, a retrieval operation of the article transport box B with respect to the storage area will be described. As shown in Figs. 5A and 5D, based on storage position information on the article transport box B to be retrieved (including stacked ones), the respective gripping columnar members 9a to 9d are raised to an ascent limit position which does not interfere with the stacked article transport box at the maximum height allowed. In this state, the supporting traveling body 2 is traveled and the transporting traveling body 3 is traveled with respect to the supporting traveling body 2, and the reference gripping columnar member 9a is placed at a position at a fixed distance away outside from the reference corner Bc of the article transport box B to be retrieved in a plan view. At this time, the respective gripping columnar members 9a to 9d are in a standby position in which a parallelogram formed inside them becomes the largest. Thus, subsequently, based on the planar size information on the article transport box B to be retrieved, the respective three gripping columnar members 9b to 9d are horizontally moved inward such that their positions in a plan view are a fixed distance away outside from respective corners of the article transport box B to be retrieved, as shown in Figs. 5B and 5E. The inward horizontal movement of the gripping columnar members 9b to 9d is made by operating the respective speed reducer equipped motors 20 to 23 of the gripping drive means 15.

More specifically, a description will be given based on Fig. 3. The speed reducer equipped motors 20 and 22 are synchronously driven to horizontally move the movable bases 13b and 13c inward in parallel along the driving screw shaft 16 and the slide guide rod 25, and simultaneously the speed reducer equipped motors 21 and 23 are synchronously driven to horizontally move the movable bases 13c and 13d inward in parallel along the driving screw shaft 19 and the slide guide rod 24, whereupon the movable bases 13b and 13d are linearly moved in a direction approaching the fixed base 13a. The movable base 13c is horizontally moved by the same distance and in the same direction as the movable base 13b and also is horizontally moved by the same distance and in the same direction as the movable base 13d. Accordingly, the four gripping columnar members 9a to 9d are moved to positions at a fixed distance away outside from four corners of the article transport box B to be retrieved in a plan view. At this time, a parallelogram one size larger than the planar size of the parallelogram of the article transport box B to be retrieved is formed inside the gripping columnar members 9a to 9d.

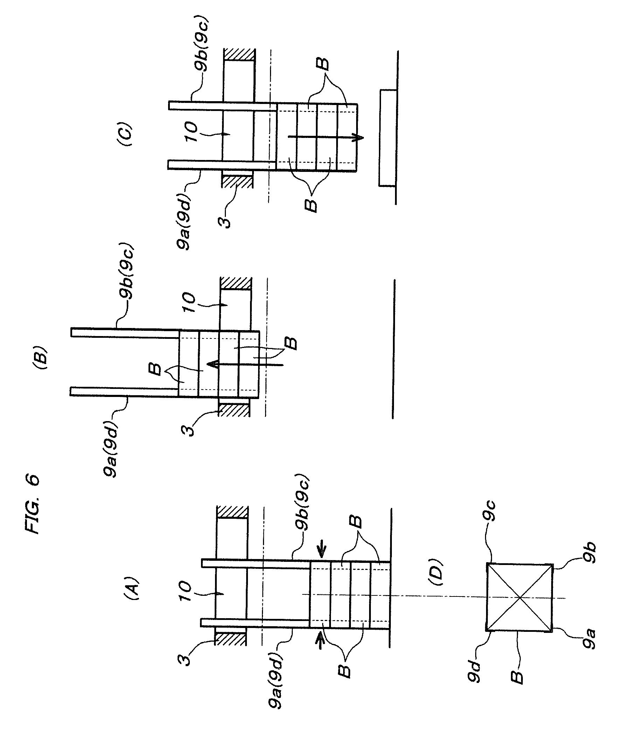

Subsequently, the respective speed reducer equipped motors 28a to 28d of the elevating drive means 26 shown in Fig. 4 are synchronously driven to lower the four gripping columnar members 9a to 9d with respect to the fixed base 13a and the movable bases 13b to 13d at the same speed via the pinion gears 29a to 29d and the rack gears 27a to 27d. In the example shown in Fig. 5, all of the stacked article transport boxes B are retrieved altogether, and thus, the respective gripping columnar members 9a to 9d are made to be lowered to a descent limit level at which their lower ends come close to the floor surface of the storage area. Subsequently, the respective speed reducer equipped motors 20 to 23 of the gripping drive means 15 are synchronously driven as described earlier and the gripping columnar members 9b to 9d supported to the movable bases 13b to 13d are horizontally moved further inward to grip the four corners of the stacked article transport boxes B to be retrieved by the four gripping columnar members 9a to 9d as shown in Figs. 6A and 6D. Since the reference gripping columnar member 9a supported to the fixed base 13a is not horizontally moved, all of the stacked article transport boxes B to be retrieved must be pushed and moved toward the gripping columnar member 9a by the horizontal movements of the other three gripping columnar members 9b to 9d.

In a case where the stacked article transport boxes B to be retrieved are so heavy that all of them cannot be pushed and moved toward the gripping columnar member 9a by the horizontal movements of the three gripping columnar members 9b to 9d as described above, the four gripping columnar members 9a to 9d are lowered to the descent limit level, after which the supporting traveling body 2 and the transporting traveling body 3 are moved based on the absolute position information of the one corner Bc of reference of the stacked article transport boxes B to be retrieved, and the reference gripping columnar member 9a which is not horizontally moved with respect to the transporting traveling body 3 is made to abut against the one corner Bc of reference of the stacked article transport boxes B to be retrieved. The rest of three gripping columnar members 9b to 9d are also horizontally moved all together at this time. To prevent the gripping columnar members 9b and 9d on both sides of the reference gripping columnar member 9a from departing from corresponding corners of the stacked article transport boxes B to be retrieved, the width of at least the gripping face (the strip elastic material 11a) of the inner perpendicular gripping faces (the strip elastic materials 11 a) of the gripping columnar members 9b and 9d which is located on the reference gripping columnar member 9a side is preferably made wider.

Alternatively, a slide base capable of sliding in a given direction in the horizontal two-dimensional plane on the transporting traveling body 3 and having an opening coinciding with the opening 10 is provided. On this slide base, the fixed base 13a and the gripping drive means 15 supporting the movable bases 13b to 13d via the driving screw shafts 16 to 19 and the slide guide rods 24 and 25 are placed. An urging means for self-aligning and retaining the slide base in a home position in which the reference gripping columnar member 9a is in place may be installed side by side. According to this configuration, when the three gripping columnar members 9b to 9d are driven by the gripping drive means 15 to grip the four corners of the stacked article transport boxes B to be retrieved by the four gripping columnar members 9a to 9d, the slide base is horizontally slid on the transporting traveling body 3 by a reaction force of pressure contact with the stacked article transport boxes B to be retrieved against an urging force of the urging means. The four corners of the stacked article transport boxes B to be retrieved can be gripped reliably and strongly by the four gripping columnar members 9a to 9d without horizontally moving the stacked article transport boxes B to be retrieved, the supporting traveling body 2 and the transporting traveling body 3.

As a further alternative to obtain the same operation and effects, braking to the supporting traveling body 2 and the transporting traveling body 3 is released to switch into a freely movable state at the final stage of driving the three gripping columnar members 9b to 9d by the gripping drive means 15 to grip the four corners of the stacked article transport boxes B to be retrieved by the four gripping columnar members 9a to 9d. The supporting traveling body 2 and the transporting traveling body 3 can be moved by the reaction force of pressure contact with the stacked article transport boxes B to be retrieved at the time of gripping the four corners of the stacked article transport boxes B to be retrieved by the four gripping columnar members 9a to 9d.

After the stacked article transport boxes B to be retrieved are gripped by the four gripping columnar members 9a to 9d in the above manner, as shown in Fig. 6B, the respective speed reducer equipped motors 28a to 28d of the elevating drive means 26 are synchronously driven in the reverse direction of rotation and the four gripping columnar members 9a to 9d are synchronously raised to the ascent limit position to raise the stacked article transport boxes B to be retrieved to a transport level where the lower ends thereof are located above a level which does not interfere with the stacked article transport box at the maximum height allowed. At this time, the stacked article transport boxes B to be retrieved are through the opening 10 of the transporting traveling body 3 together with the gripping columnar members 9a to 9d gripping them.

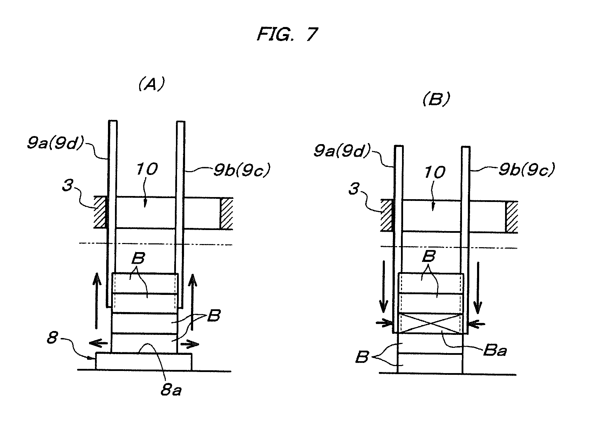

Here, the pickup of the stacked article transport boxes B to be retrieved to the transport device 1 is completed. By means of the movement of the supporting traveling body 2 and the movement of the transporting traveling body 3, the transporting traveling body 3 is moved to a retrieval home position immediately above the transferring end portion 8a of the retrieval conveyor 8. Afterwards, as shown in Fig. 6C and Fig. 7A, the elevating drive means 26 and the gripping drive means 15 are operated in the order reverse to that of the gripping and pickup operation of the stacked article transport boxes B to be retrieved from the storage area, and put down the stacked article transport boxes B to be retrieved-gripped by the four gripping columnar members 9a to 9d onto the transferring end portion 8a of the retrieval conveyor 8, and then the four gripping columnar members 9a to 9d are merely raised to the ascent limit position. At this time, the reference gripping columnar member 9a is raised remaining in a gripping position with respect to the article transport boxes B. However, the supporting traveling body 2 and the transporting traveling body 3 may be slightly moved so as to also move the reference gripping columnar member 9a away from the reference corner Bc of the article transport boxes B. At the time of releasing the gripping after the stacked article transport boxes B to be retrieved are put down onto the transferring end portion 8a of the retrieval conveyor 8, or at the time of rising to the ascent limit position or after arrival to the ascent limit position after the release of the gripping, the gripping columnar members 9b to 9d are horizontally moved to the standby position shown in Fig. 2, whereupon the retrieval operation sequence is completed.

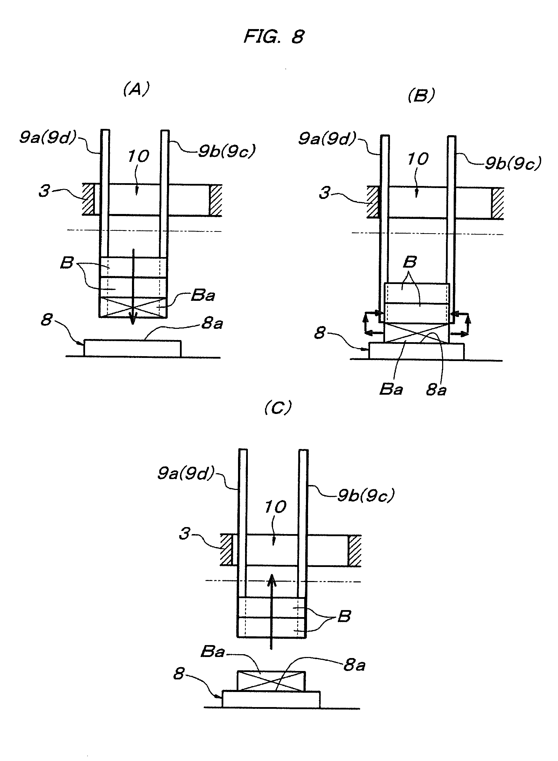

When not all but one or a plurality of article transport boxes B of the stacked article transport boxes B are retrieved, for example, when a specific article transport box Ba of the stacked article transport boxes is retrieved as shown in Fig. 7B, the four gripping columnar members 9a to 9d are lowered to a level where the lower ends thereof are located in almost the same position as the lower end of the specific article transport box Ba to be retrieved, and in this state, the foregoing retrieval operation is performed. As a result of this, the four gripping columnar members 9a to 9d grip and pick up the specific article transport box Ba to be retrieved and the article transport boxes B stacked thereon, and the transport device 1 puts down the specific article transport box Ba to be retrieved and the article transport boxes B stacked thereon which are gripped by the four gripping columnar members 9a to 9d onto the transferring end portion 8a of the retrieval conveyor 8 as shown in Fig. 8A.

Subsequently, as shown in Figs. 8B and 8C, the gripping columnar members 9a to 9d having released the gripping with respect to the specific article transport box Ba to be retrieved are once raised to a height of gripping the article transport box B immediately above the specific article transport box Ba and the article transport box B thereabove. After that, allowing the gripping columnar members 9a to 9d to perform the gripping again, the gripping columnar members 9a to 9d are raised to the ascent limit position while gripping the article transport box B immediately above the specific article transport box Ba and the article transport box B thereabove, that is, the stacked article transport boxes B to be restored. Afterwards, by means of the movements of the supporting traveling body 2 and the transporting traveling body 3, the article transport boxes B to be restored are transported to the original position where the specific article transport box Ba has been picked up or another empty position, and transferred so as to be laid on the article transport box B located in the original position where the specific article transport box Ba has been picked up or put down onto the new empty position in the same order as the putting down operation onto the transferring end portion 8a of the retrieval conveyor 8.

According to the transport device 1 of the above configuration, not only can the stacked article transport boxes B stored in the storage area be retrieved as they are, but one specific article transport box B in the intermediate position of the stacked article transport boxes B can also be retrieved as described above. As a matter of course, retrieval operations of the lowermost article transport box B, the top article transport box B, and a plurality of article transport boxes B in the intermediate position, etc., of the stacked article transport boxes B are also possible by the same method. By performing the above retrieval operation in the reverse order, stacked article transport boxes B or one article transport box B to be stored having been transported to the transferring end portion 7a by the storage conveyor 7 can be put into storage in an empty position within the storage area or so as to be laid on an article transport box B with the same planar size having been put into storage and stored earlier.

Next, another embodiment of the gripping drive means for causing the gripping columnar members 9a to 9d to perform the gripping will be described.

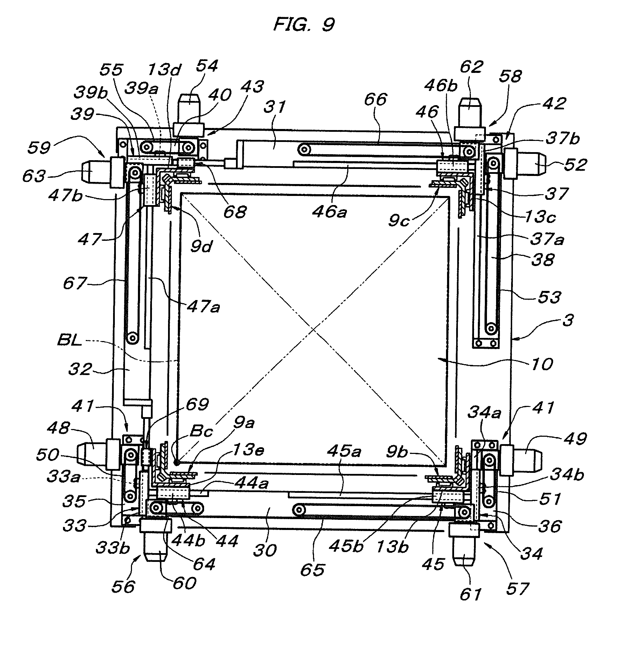

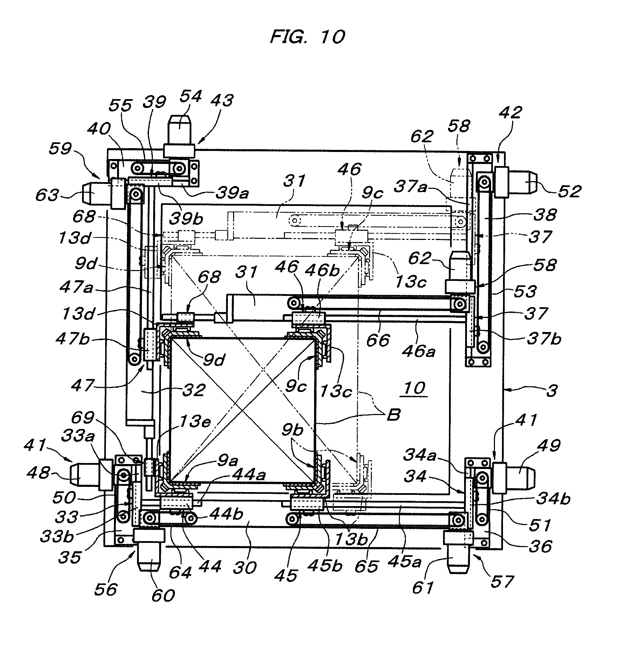

In another embodiment shown in Fig. 9 and Fig. 10, the reference gripping columnar member 9a is also vertically movably supported to a movable base 13e in the same manner as the other gripping columnar members 9b to 9d. In a state where the four gripping columnar members 9a to 9d are in a retracting position where a virtual parallelogram formed inside them becomes the largest, there are provided a first laterally moving base 30 parallel to a side between the movable bases 13e and 13b of the virtual parallelogram, a second laterally moving base 31 parallel to a side between the movable bases 13c and 13d, a third laterally moving base 32 parallel to a side between the movable bases 13d and 13e, a pair of first fixed bases 35 and 36 having slide guide means 33 and 34 supporting and guiding both ends of the first laterally moving base 30 such that the first laterally moving base 30 can be translated in a direction perpendicular to the length direction thereof, a second fixed base 38 having a slide guide means 37 supporting and guiding one end of the second laterally moving base 31 (an end portion on the movable base 13c side) such that the second laterally moving base 31 can be translated in a direction perpendicular to the length direction thereof, a third fixed base 40 having a slide guide means 39 supporting and guiding one end of the third laterally moving base 32 (an end portion on the movable base 13d side) such that the third laterally moving base 32 can be translated in a direction perpendicular to the length direction thereof, a first drive means 41 translating the first laterally moving base 30, a second drive means 42 translating the second laterally moving base 31, and a third drive means 43 translating the third laterally moving base 32.

The movable base 13e and the movable base 13b are supported to the first laterally moving base 30 via the slide guide means 44 and 45 respectively so as to be movable in the length direction of the first laterally moving base 30. The movable base 13c is supported to the second laterally moving base 31 via the slide guide means 46 so as to be movable in the length direction of the second laterally moving base 31. The movable base 13d is supported to the third laterally moving base 32 via the slide guide means 47 so as to be movable in the length direction of the third laterally moving base 32. The slide guide means 33, 34, 37, 39 and 44 to 47 are conventionally known ones that are each composed of a slide guide rail 33a, 34a, 37a, 39a, and 44a to 47a laid on the side that supports a sliding object, and a slide block 33b, 34b, 37b, 39b and 44b to 47b provided to the sliding side so as to be fitted to the slide guide rail.

The first drive means 41 is composed of wrapping transmission tools 50 and 51 such as chains or belts stretched on the first fixed bases 35 and 36 and respectively driven to rotate in normal and reverse directions by speed reducer equipped motors 48 and 49. These wrapping transmission tools 50 and 51 are coupled to both ends of the first laterally moving base 30 via the slide blocks 33b and 34b constituting the slide guide means 33 and 34. The second drive means 42 is composed of a wrapping transmission tool 53 such as a chain or belt stretched on the second fixed base 38 and driven to rotate in normal and reverse directions by a speed reducer equipped motor 52. The wrapping transmission tool 53 is coupled to one end of the second laterally moving base 31 via the slide block 37b constituting the slide guide means 37. The third drive means 43 is composed of a wrapping transmission tool 55 such as a chain or belt stretched on the third fixed base 40 and driven to rotate in normal and reverse directions by a speed reducer equipped motor 54. The wrapping transmission tool 55 is coupled to one end of the third laterally moving base 32 via the slide block 39b constituting the slide guide means 39.

A first movable base drive means 56 moving the movable base 13e with respect to the first laterally moving base 30 and a second movable base drive means 57 moving the movable base 13b with respect to the first laterally moving base 30 are provided on this first laterally moving base 30. A third movable base drive means 58 moving the movable base 13c with respect to the second laterally moving base 32 is provided on this second laterally moving base 31. A fourth movable base drive means 59 moving the movable base 13d with respect to the third laterally moving base 32 is provided on this third laterally moving base 32. The movable base drive means 56 to 59 are each composed of a wrapping transmission tool 64 to 67 such as a chain or belt stretched on the respective laterally moving base 30 to 32 and driven to rotate in normal and reverse directions by a speed reducer equipped motor 60 to 63. The movable bases 13b to 13e are respectively coupled to the wrapping transmission tools 64 to 67 via the slide blocks 44b to 47b constituting the slide guide means 44 to 47.

According to the foregoing configuration, a pair of speed reducer equipped motors 48 and 49 of the first drive means 41 are synchronously driven to translate the both ends of the first laterally moving base 30 inward by the wrapping transmission tools 50 and 51, whereupon the movable bases 13e and 13b can be synchronously moved inward by the same distance. The speed reducer equipped motor 60 of the first movable base drive means 56 and the speed reducer equipped motor 54 of the third drive means 43 are synchronously driven, whereupon the movable base 13e can be moved directly by the wrapping transmission tool 64 and the movable base 13d can be moved by the wrapping transmission tool 55 via the third laterally moving base 32, synchronously inward by the same distance, respectively. The speed reducer equipped motor 61 of the second movable base drive means 57 and the speed reducer equipped motor 62 of the third movable base drive means 58 are synchronously driven, whereupon the movable bases 13b and 13c can be synchronously moved "a link (for a predetermined contents) error" by the wrapping transmission tools 65 and 66, respectively. Further, the speed reducer equipped motor 52 of the second drive means 42 and the speed reducer equipped motor 63 of the fourth movable base drive means 59 are synchronously driven, whereupon the movable base 13c can be moved by the wrapping transmission tool 53 via the second laterally moving base 31 and the movable base 13d can be moved directly by the wrapping transmission tool 67, synchronously inward by the same distance, respectively.

That is, by simultaneously driving the first to third drive means 41 to 43 and the first to fourth movable base drive means 56 to 59 in the above manner, the gripping columnar members 9a to 9d attached to the four movable bases 13b to 13e can be moved so as to be always positioned on four corners of a parallelogram having a given aspect ratio size within the range of the movement of the respective movable bases 13b to 13e.

In other words, as shown in Fig. 9, after the transporting traveling body 3 with the four gripping columnar members 9a to 9d in the retracting position of being a fixed distance away outside from the four corners of the article transport box BL having the largest planar size reaches the position where the reference gripping columnar member 9a is a fixed distance away from the reference corner Bc of the article transport box to be stored/retrieved in a plan view, that is, the pickup position of the article transport box to be stored/retrieved, the gripping columnar members 9b and 9d are horizontally moved only in a direction approaching the reference gripping columnar member 9a, and the gripping columnar member 9c is horizontally moved by the same distance and in the same direction as the gripping columnar member 9b and also horizontally moved by the same distance and in the same direction as the gripping columnar member 9d. As a result, all gripping columnar members 9a to 9d reach an ascent starting position of being almost the same distance away from respective corners of the article transport box to be stored/retrieved. The gripping columnar members 9a to 9d are all lowered to a predetermined level in this state, thereafter made to start the gripping.

In the configuration of this embodiment, the gripping by the four gripping columnar members 9a to 9d can be performed by simultaneously driving the first to third drive means 41 to 43 and the first to fourth movable base drive means 56 to 59 as above to horizontally move the respective gripping columnar members 9a to 9d diagonally and linearly toward corresponding corners of the article transport box to be stored/retrieved in the opposed positions and as shown in Fig. 10, substantially simultaneously fitting and pressure-contacting the respective gripping columnar members 9a to 9d to the corresponding corners of the article transport box to be gripped. Thus, the need for adjusting the position of the transporting traveling body 3 at the final stage of the gripping of the article transport box as in the previous embodiment or for placing all of the four gripping columnar members 9a to 9d on the self-aligning slide base is eliminated.

In the foregoing embodiment, the second and third laterally moving bases 31 and 32 slidably supporting the movable bases 13c and 13d have one end portion supported in a cantilever manner to the second and third fixed bases 38 and 40 via the slide guide means 37 and 39 respectively. In order to solve a problem in terms of the strength of this configuration, the second and third laterally moving bases 31 and 32 can have both-end supported structure by coupling the second laterally moving base 31 and the movable base 13d by a slide coupling means 68 allowing only relative movement of the both in the length direction of the second laterally moving base 31 and composed of a rod and a slide member freely fitted thereto and by coupling the third laterally moving base 32 and the movable base 13e by a slide coupling means 69 allowing only relative movement of the both in the length direction of the third laterally moving base 32 and composed of a rod and a slide member freely fitted thereto, considering the point that the movable base 13c is synchronized with the movable base 13d to move in the same direction and the movable base 13d is synchronized with the movable base 13e to move in the same direction.

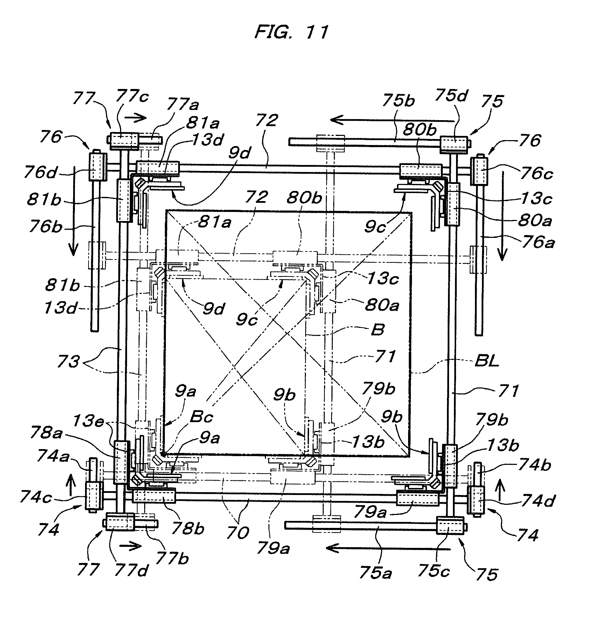

Fig. 11 illustrates another support structure of the respective movable bases 13b to 13e in the embodiment shown in Fig. 9 and Fig. 10. In the configuration shown in Fig. 11, guide rods 70 to 73 being parallel to corresponding sides of the largest virtual parallelogram formed inside the four gripping columnar members 9a to 9d in the retracting position and having a length sufficient to intersect crosswise with each other on respective corners are arranged outside the respective sides of the virtual parallelogram, and slide support means 74 to 77 supporting both ends of the respective guide rods 70 to 73 respectively and supporting the guide rods 70 to 73 so as to be horizontally translated in a direction perpendicular to the length direction thereof are placed side by side. The slide support means 74 to 77 are each composed of positionally fixed slide rails 74a and 74b to 77a and 77b and slide blocks 74c and 74d to 77c and 77d slidably fitted to the slide rails and attached to both ends of the respective guide rods 70 to 73.

To the respective guide rods 70 to 73, support members 78a and 78b to 81 a and 81b slidable in the length directions of the guide rods 70 to 73 are attached at positions in the vicinity of four intersections thereof. The respective movable bases 13b to 13e arranged inside the four intersections of the respective guide rods 70 to 73 are attached to the pair of support members 78a and 78b to 81a and 81b arranged at the respective intersections and being slidable in the perpendicular direction. Although a drive means for horizontally translating the respective guide rods 70 to 73 in directions perpendicular to the length directions thereof is omitted, a drive means which uses the motor-driven driving screw shafts shown in Fig. 3 or a drive means which uses the motor-driven wrapping transmission tools shown in Fig. 9, etc., can be employed. In the configuration shown in Fig. 11 as well, the four gripping columnar members 9a to 9d vertically movably supported to the movable bases 13b to 13d are horizontally approached diagonally and linearly to the four corners of the article transport box to be stored/retrieved, and the four corners of the article transport box can be gripped reliably by the four gripping columnar members 9a to 9d. Therefore, the same effects as those of the configuration shown in Fig. 9 and Fig. 10 can be expected.

The gripping drive means providing the gripping force to the four gripping columnar members 9a to 9d is placed on the transporting traveling body 3 supporting the four gripping columnar members 9a to 9d in the transport device of the present invention. It is thus conceivable that a sufficient gripping force cannot be obtained around the lower end portions of the gripping columnar members 9a to 9d due to bending of the gripping columnar members when the article transport box is gripped by the gripping columnar members 9a to 9d having been lowered to the descent limit position from the transporting traveling body 3. As a method for preventing such situation, a narrowing means narrowing at least the lower end portions of the four gripping columnar members 9a to 9d inward can be placed side by side with the four gripping columnar members 9a to 9d, apart from the gripping drive means.

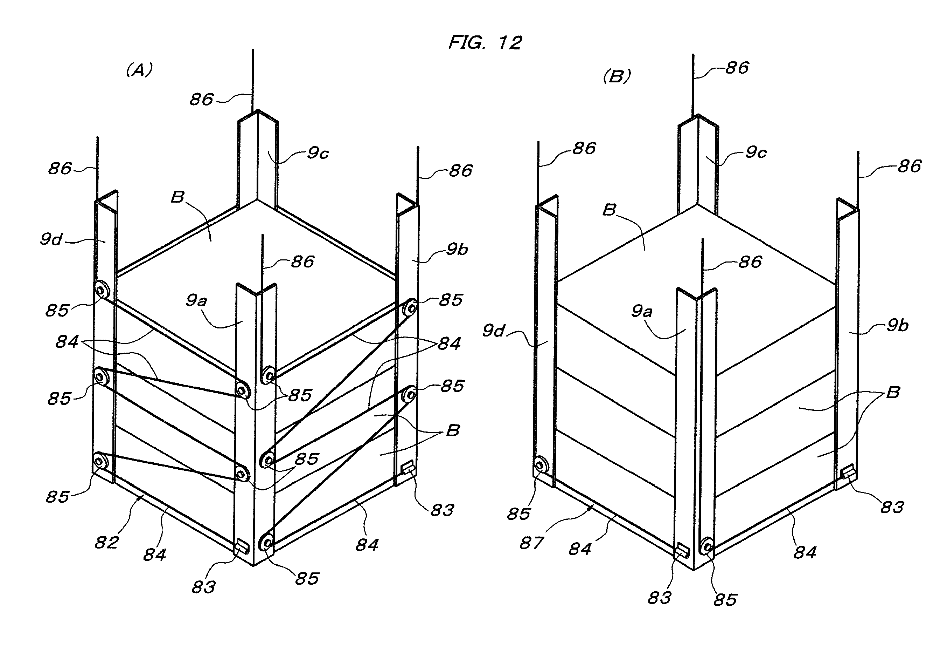

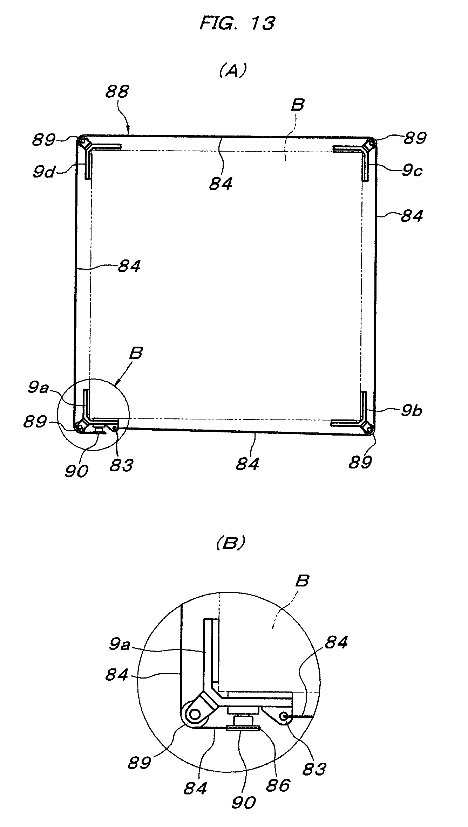

A narrowing means 82 shown in Fig. 12A is formed such that four pulling cord-like bodies 84 having an end portion 83 locked to the lower end portion of one of the gripping columnar members are run in a zigzag pattern at nearly zero angle between two adjacent gripping columnar members 9a and 9b, gripping columnar members 9b and 9c, gripping columnar members 9c and 9d, and gripping columnar members 9d and 9a by guide wheels 85 pivotally supported on outer surfaces of the respective gripping columnar members 9a to 9d, and the other ends of the respective pulling cord-like bodies 84 are extended upward as pulling-up operating end portions 86. A narrowing means 87 shown in Fig. 12B is formed such that the pulling cord-like bodies 84 of the narrowing means 82 shown in Fig. 12A are run only one turn between lower ends of the two adjacent gripping columnar members and directly extended upward as the pulling-up operating end portions 86. Further, a narrowing means 88 shown in Fig. 13 is formed such that guide wheels 89 are pivotally supported outside the lower ends of the gripping columnar members 9a to 9d so as to be rotatable about vertical shafts, and a single pulling cord-like body 84 whose end portion 83 is locked to a given gripping columnar member, for example, the gripping columnar member 9a, is stretched to surround the lower end portions of the four gripping columnar members 9a to 9d by means of the respective guide wheels 89, and a free end side of the pulling cord-like body 84 is extended upward as the pulling-up operating end portion 86 through a guide wheel 90 pivotally supported to the gripping columnar member 9a to which the end portion 83 is locked, so as to be rotatable about a horizontal spindle.

According to the respective narrowing means 82, 87 and 88, the pulling-up operating end portions 86 are wound up by a winding means mounted on the transporting traveling body 3 while the four corners of the article transport box to be stored/retrieved are gripped with the gripping columnar members 9a to 9d by the gripping drive means, and the two adjacent gripping columnar members 9a and 9b, gripping columnar members 9b and 9c, gripping columnar members 9c and 9d, and gripping columnar members 9d and 9a are narrowed to reduce the spacings therebetween by the respective pulling cord-like bodies 84, whereby the pressure contact force (gripping force) of the respective gripping columnar members 9a to 9d with respect to corresponding corners of the article transport box to be stored/retrieved can be increased.

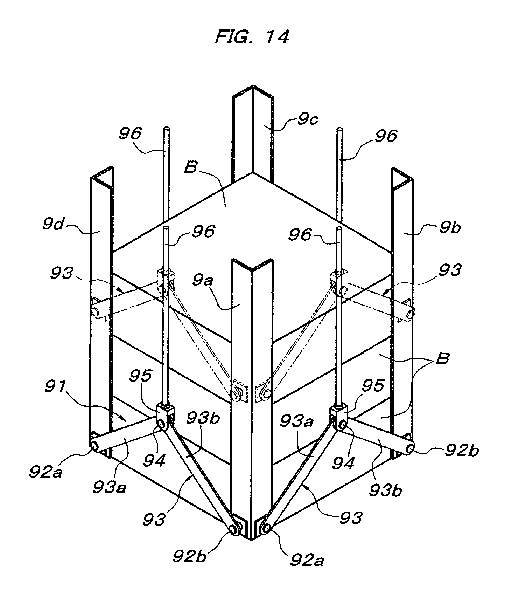

A narrowing means 91 shown in Fig. 14 is composed of vertically foldable and expandable double links 93 between the two adjacent gripping columnar members 9a and 9b, gripping columnar members 9b and 9c, gripping columnar members 9c and 9d, and gripping columnar members 9d and 9a, the double links 93 having both ends pivotally supported outside the lower end portions of both gripping columnar members by horizontal spindles 92a and 92b, and lifting rods 96 upwardly lifting intermediate fulcrum members 95 movably supported to intermediate fulcrum shafts 94 each coupling a pair of links 93a and 93b of the double link 93 together. This narrowing means 91 can also be composed of a plurality of vertical stages of the double links 93 lifted by common lifting rods 96, as shown by the phantom line. Each lifting rod 96 of the narrowing means 91 is lifted by a lifting means provided on the transporting traveling body 3 and driven by a cylinder unit or motor while the four corners of the article transport box to be stored/retrieved are gripped with the gripping columnar members 9a to 9d by the gripping drive means, whereby the spacings between the two adjacent gripping columnar members 9a and 9b, gripping columnar members 9b and 9c, gripping columnar members 9c and 9d, and gripping columnar members 9d and 9a are reduced by the upwardly folded respective double links 93, and then the pressure contact force (gripping force) of the respective gripping columnar members 9a to 9d with respect to the corresponding corners of the article transport box to be stored/retrieved can be increased.

The winding means of the pulling cord-like bodies 84 of the narrowing means 82, 87 and 88 must be able to be kept urged in a lifting direction at all times so as not to be slackened when the gripping columnar members 9a to 9d are horizontally moved from the standby position to the gripping position. The lifting means of the lifting rods 96 of the narrowing means 91 must be able to accept the movement upwardly pushed by the double links 93 when the gripping columnar members 9a to 9d are horizontally moved from the standby position to the gripping position. Furthermore, these winding means and lifting means must be able to perform the narrowing as intended with respect to the gripping columnar members 9a to 9d gripping the article transport box, free of influence from the elevating movement of the gripping columnar members 9a to 9d and the horizontal movement from the standby position to the gripping position.

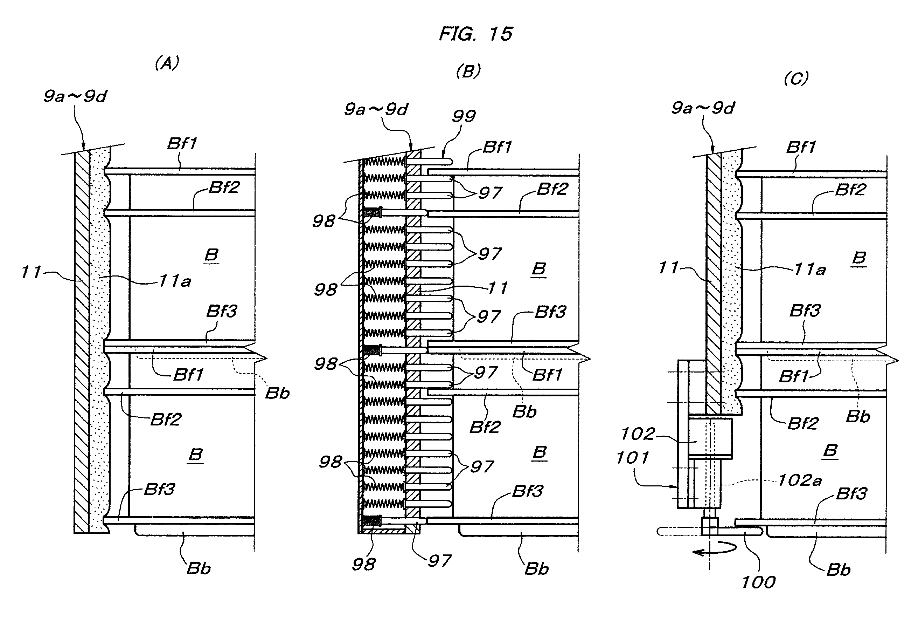

The gripping faces (perpendicular inner surfaces) of all or at least two diagonally positioned gripping columnar members of the respective gripping columnar members 9a to 9d, for example, the gripping columnar members 9a and 9c, are preferably composed of an anti-slip means suppressing relative vertical slip with the article transport box at the time of being pressure-contacted thereto. In addition to that the strip elastic materials 11a such as rubber or air bags affixed to the perpendicular inner surfaces of the long main body 11 can be used as this anti-slip means as shown in Fig. 15A, a pinholder shaped anti-slip means 99 formed such that pins 97 advanceable and retractable in directions perpendicular and horizontal to the gripping faces of the long main body 11 arc closely arranged in a pinholder shape and an urging means 98 such as springs urging corresponding pins 97 in directions projecting inward from the gripping faces are placed side by side can also be used, as shown in Fig. 15B. Especially, this pinholder shaped anti-slip means 99 is particularly suitable for gripping of an article transport box B having reinforcing flanges Bf1 to Bf3 jutting outward, since the plurality of pins 97 entering below the flanges Bf strongly inhibit the article transport box B from slipping off as shown. The article transport box B having the three-step flanges Bf1 to Bf3 is exemplified, but the number of steps of the reinforcing flanges is not limited.

This kind of article transport box B is mostly provided with a projecting bottom portion Bb fitted to an upper end opening of the lower-step article transport box B when stacked, and a lower end flange Bf3 placed on an upper end flange Bf1 of the lower-step article transport box B when stacked. In the case of handling such article transport box B, an anti-slip means 101 having a receiver 100 switchable between an acting position of receiving the bottom surface of the article transport box B, more specifically, the lower surface of the lower end flange Bf3, and a retracting position of being away sideways from the article transport box B can be provided to the lower ends of all or at least two diagonally positioned gripping columnar members of the gripping columnar members 9a to 9d, for example, the gripping columnar members 9a and 9c, as shown in Fig. 15C. The shown receiver 100 is attached to a vertical rotary shaft 102a of an actuator 102 composed of a solenoid, etc., attached outside the lower end of the gripping columnar member, and is designed so that the receiver 100 is rotated horizontally between the acting position and the retracting position by the rotation of the vertical rotary shaft 102. By providing the receiver 100 directly supporting the periphery of the bottom portion of the lowermost article transport box B in this manner, the article transport box B can be gripped and transported more reliably and safely. Further, the receiver 100 can be placed side by side with other anti-slip means.

### Industrial Applicability

The transport device for article transport boxes of the present invention can be utilized in a facility for storing or sorting stacked box-type pallets of various sizes.

### Description of Reference Symbols

B, Ba, BL: article transport box
1: overhead traveling crane type transport device
2: supporting traveling body
3: transporting traveling body
4: rectangular frame structure
6a - 6d: guide rail
7: storage conveyor
7a, 8a: transferring end portion
8: retrieval conveyor
9a - 9d: gripping columnar member
10: opening
11: long main body
11a: strip elastic material
12: elevating guide rail
13a: fixed base
13b - 13e: movable base
15: gripping drive means
16 - 19: driving screw shaft
20 - 23, 28a - 28d, 48, 49, 52, 54, 60 - 63: speed reducer equipped motor
24, 25: slide guide rod
26: elevating drive means
27a - 27d: rack gear
30 - 32: laterally moving base
33, 34, 37, 39, 44 - 47: slide guide means
35, 36, 38, 40: fixed base
50, 51, 53, 55, 64 - 67: wrapping transmission tool
56 - 59: movable base drive means
68, 69: slide coupling means
70 - 73: guide rod
74 - 77: slide support means
82, 87, 88, 91: narrowing means
84: pulling cord-like body
85, 89, 90: guide wheel
93: double link
95: intermediate fulcrum member
96: lifting rod
99, 101: anti-slip means
100: receiver
102: actuator

## Claims

1. A transport device for article transport boxes **characterized in that** a transporting traveling body (3) supported so as to be horizontally travelable on an upper side of a storage area is provided with four vertically oriented gripping columnar members (9a to 9d) respectively gripping four corners of a stackable article transport box (B) placed in the storage area and having a planar shape of a rectangular parallelogram, and the four gripping columnar members (9a to 9d) have an angular shape in cross section, in the inside of which gripping faces pressure-contacted to rectangular sides on both sides of each corner of the article transport box (B) are provided, and an elevating drive means (26) raising and lowering the four gripping columnar members (9a to 9d) with respect to the transporting traveling body (3) and a gripping drive means (15) are provided to the transporting traveling body (3), and the gripping drive means (15) moves at least three gripping columnar members (9b to 9d) of the four gripping columnar members (9a to 9d) horizontally between a retracting position of being away outside from each corner of the article transport box (B), and a gripping position of liftably gripping the article transport box (B) via the four corners thereof by way of the four gripping columnar members (9a to 9d).

2. The transport device for article transport boxes as claimed in Claim 1, wherein the storage area has a horizontal supporting surface on which the article transport box (B) is dispersed and supported in both front-rear and left-right both directions in a fixed orientation; and transferring end portions (7a, 8a) of storage and retrieval conveyors (7, 8) transporting the article transport box (B), and the transporting traveling body (3) is supported such that front-rear direction movement and left-right direction movement are allowed to cover the entire area including the rectangular horizontal supporting surface and the ports for storage and retrieval.

3. The transport device for article transport boxes as claimed in either Claim 1 or 2, wherein the four gripping columnar members (9a to 9d) have a length in an elevating direction sufficient to grip a plurality of stacked article transport boxes (B) having the same planar size all together.

4. The transport device for article transport boxes as claimed in any one of Claims 1 to 3, wherein the four gripping columnar members (9a to 9d) are designed to be vertically movable within a vertical through opening (10) provided to the transporting traveling body (3), together with their gripping article transport box (B).

5. The transport device for article transport boxes as claimed in any one of Claims 1 to 4, wherein one of the four gripping columnar members (9a) which is positioned on one corner between two rectangular sides of a rectangular parallelogram space formed inside the four gripping columnar members (9a to 9d) is only vertically movably supported at a fixed position of the transporting traveling body (3) as a reference gripping columnar member, and the respective gripping columnar members (9a to 9d) positioned on the other three corners are vertically movably supported to three movable bases (13b to 13d) capable of horizontal movement in a direction parallel to one of two rectangular sides extending from each corner and horizontal movement in a direction parallel to the other side, and the gripping drive means (15) is capable of moving the three movable bases (13b to 13d) by a given distance such that a space formed inside the three gripping columnar members (9b to 9d) after the horizontal movement and the reference gripping columnar member becomes a rectangular parallelogram in a plan view.

6. The transport device for article transport boxes as claimed in any one of Claims 1 to 4, wherein a rectangular parallelogram space formed inside the four gripping columnar members (9a to 9d) has four corners, in the outside of which a movable base (13b to 13e) capable of horizontal movement in a direction parallel to one of two rectangular sides extending from each corner and horizontal movement in a direction parallel to the other side is arranged, and the gripping columnar members (9a to 9d) are respectively vertically movably supported to the four movable bases (13b to 13e), and the gripping drive means (41 to 43) is capable of moving the four movable bases (13b to 13e) by a given distance such that a space formed inside the four gripping columnar members (9a to 9d) after the horizontal movement becomes a rectangular parallelogram.

7. The transport device for article transport boxes as claimed in any one of Claims 1 to 6, wherein a narrowing means (82, 87, 88, 91) narrowing at least lower end portions of the four gripping columnar members (9a to 9d) inward is placed side by side with the four gripping columnar members (9a to 9d), apart from the gripping drive means.

8. The transport device for article transport boxes as claimed in Claim 7, wherein the narrowing means (82, 87, 88) is composed of a pulling cord-like body (84) stretched between adjacent gripping columnar members (9a, 9b; 9b, 9c; 9c, 9d; 9d, 9a).

9. The transport device for article transport boxes as claimed in Claim 7, wherein the narrowing means (91) bis composed of a double link (93) having both end portions pivotally supported to adjacent gripping columnar members (9a, 9b; 9b, 9c; 9c, 9d; 9d, 9a) and an intermediate fulcrum portion (94) lifted upward.

10. The transport device for article transport boxes as claimed in any one of Claims 1 to 9, wherein the gripping faces of at least two diagonally positioned gripping columnar members of the four gripping columnar members (9a to 9d) are composed of an anti-slip means (11a, 99) inhibiting relative vertical slip with the article transport box (B) at the time of being pressure-contacted thereto.

11. The transport device for article transport boxes as claimed in any one of Claims 1 to 10, wherein at least two diagonally positioned gripping columnar members of the four gripping columnar members (9a to 9d) have a lower end provided with a receiver (100) switchable between an acting position of receiving a bottom surface of the article transport box (B) and a retracting position of being away sideways from the article transport box (B).
